# FASCICULE DE BREVET EUROPEEN

(11) **EP 2 167 310 B1**
(45) Date de publication et mention de la délivrance du brevet: **22.12.2010**
(21) Numéro de dépôt: 08826512.9
(22) Date de dépôt: 11.07.2008
(51) Int. Cl.: B32B 7/08, B29C 70/24, D05B 1/00

(54) **PRODUIT TEXTILE POUR STRUCTURE SANDWICH ET PROCÉDÉ DE FABRICATION**
TEXTILPRODUKT FÜR EINE SANDWICH-STRUKTUR UND VERFAHREN ZU SEINER HERSTELLUNG
TEXTILE PRODUCT FOR A SANDWICH STRUCTURE, AND PRODUCTION METHOD

(30) Priorité: 13.07.2007 FR 0756486
(43) Date de publication de la demande: 31.03.2010
(73) Titulaire: Chomarat Textiles Industries, 69003 Lyon (FR)
(72) Inventeur: CAHUZAC, Georges, F-33110 Le Bouscat (FR); ROURE, Thomas, F-07160 Le Cheylard (FR)
(74) Mandataire: Palix, Stéphane
(86) Numéro de dépôt international: PCT/FR2008/051327
(87) Numéro de publication internationale: WO 2009/013430

(56) Documents cités:
- WO-A-2006/125561
- FR-A- 2 718 670
- FR-A- 2 870 861
- US-A- 2 491 457

## Description

### DOMAINE TECHNIQUE

L'invention se rattache au domaine des textiles techniques, et en particulier des textiles utilisés pour la réalisation de pièces en matériau composite, en particulier par des procédés d'injection ou d'infusion de résine.

Elle vise plus spécifiquement une structure textile tridimensionnelle, présentant des propriétés améliorées en termes de résistance mécanique à l'écrasement et au cisaillement, combinées avec le cas échéant un allègement. Elle concerne également un procédé de fabrication d'un tel produit textile.

### TECHNIQUES ANTERIEURES

De manière générale, les produits composites sont largement utilisés pour la réalisation de structures mécaniques très variées. Les matériaux composites sont appréciés pour leur résistance mécanique, combinée avec une capacité à adopter des formes variées, pour un poids généralement moindre que les équivalents en structure métallique par exemple. Les structures composites comportent généralement une ou plusieurs couches de matériau textile imprégnées d'une résine thermodurcissable, qui après polymérisation, confère la rigidité à la structure.

Les matériaux composites doivent également présenter une certaine épaisseur, pour posséder des propriétés mécaniques satisfaisantes. Ainsi, les structures composites sont fréquemment réalisées à base d'un produit textile lui-même formé d'un empilement de couches assemblées. Parmi ces couches, la partie centrale (ou âme) présente une densité faible, et est globalement plutôt imperméable à la résine, de manière à former un espaceur entre les couches externes qui au contraire sont imprégnées de résine, et confèrent donc une rigidité à l'ensemble. Or, il convient également que la couche d'âme centrale, de faible densité, présente une résistance mécanique suffisante, tant à l'écrasement qu'au cisaillement. Pour ce faire, on a déjà proposé l'emploi d'un matériau spécifique tel que des structures à nid d'abeilles ou analogues. Toutefois, l'emploi de ces matériaux renchérit le coût global du matériau composite. En outre, pour former la structure sandwich, il est nécessaire de solidariser les couches textiles destinées à être imprégnées, avec cette âme centrale, par des procédés de collage ou analogues qui ne sont pas toujours satisfaisants en termes de résistance à la délamination.

C'est pourquoi certaines solutions ont été proposées qui consistent à assurer l'assemblage des différentes couches de la structure sandwich par des opérations de couture ou analogues. Les fils de liage cousus dans l'épaisseur de la structure permettent, outre la solidarisation des différentes couches, d'augmenter la résistance à la compression. En effet, lorsque ces fils de liage sont soumis à l'injection de résine, ils s'en imprègnent par capillarité et forment donc des réseaux de pontage entre les deux faces du sandwich.

Différents exemples de ce type de couture ont ainsi été décrits. Ainsi, la structure décrite dans le document FR-2 718 670 comporte une pluralité de fils traversants la couche centrale. Plus précisément, les fils de liage sont amenés d'une première face vers la face opposée par une opération de piquage qui permet de faire apparaître une boucle sur cette seconde face. Si elle permet d'assurer un liage du sandwich, cette technique n'est toutefois pas totalement satisfaisante, dans la mesure où elle repose uniquement sur des phénomènes de friction du fil de liage à l'intérieur de la couche d'âme. Ainsi, des sollicitations mécaniques importantes avant imprégnation peuvent provoquer la désolidarisation au moins locale des différentes couches du sandwich. En outre, la résistance au cisaillement d'une telle structure n'est pas optimale et en particulier pas isotrope, puisque elle n'est obtenue que dans les directions des fils de liages. Une isotropie nécessiterait la couture de quatre fils différents, ce qui bien entendu complique et renchérit le procédé de fabrication.

Une autre solution a été proposée dans le document WO-2006/125561. Son principe consiste à assurer des pontages entre les deux faces du sandwich, à travers la couche d'âme, en insérant des segments de fils qui sont coupés, pour que leurs extrémités soient ensuite étalées à la surface de la structure. Les pontages ainsi réalisés sont efficaces lorsque l'imprégnation de résine a eu lieu. Toutefois, la mise en place de ces pontages tirés par une aiguille génère des ouvertures dans la couche d'âme, plus importantes que la section du fil tiré, ce qui crée des accumulations importantes de cette résine dans la couche d'âme. En outre, avant imprégnation, les différentes couches ne sont pas réellement solidarisées, et des manipulations peuvent provoquer la désolidarisation au moins locale des couches du sandwich.

Une autre solution a été proposée dans le document FR-2 695 864, qui décrit un liage des couches du sandwich par des fils traversants. Plus précisément, un fil de liage présente des portions qui sont amenées d'une face à l'autre par des perçages obliques, de manière à faire dépasser sur la face opposée des petites boucles. De ce fait, les extrémités de ces portions traversantes ne sont pas maintenues fermement au niveau de la face opposée, de sorte que le produit peut être délicat à manipuler, avec des risques de désolidarisation des différentes couches. En outre, les perçages effectués peuvent être des zones d'accumulation de la résine, cause d'alourdissement de la pièce composite finie. Enfin, en termes de propriétés mécaniques, la résistance au cisaillement d'un tel sandwich n'est pas réellement satisfaisante. En effet, les fils de liage présentent des portions traversantes qui sont toutes parallèles de sorte que la résistance au cisaillement est seulement satisfaisante dans l'unique direction des segments traversants des fils de liage. Autrement dit, pour améliorer cette résistance au cisaillement, il conviendrait de multiplier l'insertion de fils de liage dans des directions multiples, ce qui bien entendu multiplie les opérations de couture et n'est pas toujours possible.

Par ailleurs, on a décrit dans le document DE-197 51 011 une machine à coudre permettant la couture de fils d'assemblage au travers de structures épaisses par la création d'un point de couture spécifique. Plus précisément, cette machine comporte deux aiguilles distinctes, qui se déplacent dans un plan perpendiculaire à la direction de couture. Ainsi, chaque point de couture comporte deux segments de fils qui traversent le produit d'une face à l'autre. Le fil est ainsi introduit à travers l'article à coudre par une aiguille possédant un chas fermé. Après traversée de l'article, le fil est attrapé par une seconde aiguille possédant un chas ouvert. Cette seconde aiguille remonte le fil pour faire traverser à nouveau l'article par un second segment traversant. L'extrémité de ce point de couture est ensuite liée avec le point suivant par la formation d'un point de chaînette. Cette machine présente toutefois certains inconvénients. En effet, le chas ouvert de l'aiguille tirant le second segment peut provoquer des accrochages lors de la traversée des tissus, avec des conséquences néfastes pour la qualité des produits réalisés. La résistance au cisaillement dans une direction parallèle à la direction de couture est donc particulièrement faible.

L'un des objectifs de l'invention est donc de fournir un produit textile qui, une fois imprégné, présente une résistance au cisaillement la plus isotrope possible. Un autre objectif est de permettre la mise en place des fils de liage par des opérations simples et limitées, compatibles avec une production en ligne. Un autre objectif de l'invention est de permettre la couture sur divers supports, en assurant le cas échéant une bonne solidarisation d'une structure sandwich, sans risque trop élevé de créer des zones d'accumulation inopinées de résine.

Un autre objectif est d'obtenir une structure facilement conformable, mais résistante aux manipulations.

### EXPOSE DE L'INVENTION

L'invention concerne donc un produit textile tridimensionnel présentant deux faces reliées par une pluralité de fils de liage cousus au travers du produit et structurant l'épaisseur du produit. De façon connue, chaque fil de liage comprend une succession de points de couture. Chaque point de couture comporte deux segments qui traversent le produit d'une face à l'autre, ces deux segments étant dans le même plan.

Conformément à l'invention, le produit comporte deux réseaux de fils de structuration distincts, et pour chaque réseau de fils, au niveau d'un point de couture, le plan formé par les segments du fil qui traversent le produit, possède une direction normale qui présente une inclinaison non nulle par rapport à la direction globale de couture du fil de liage, les inclinaisons de ces plans étant différentes d'un type de fils à l'autre.

Par "type distincts" de fil de liage, on entend des fils qui peuvent être de même nature, mais qui sont cousus selon des configurations différentes, et qui ne peuvent donc pas se déduire les uns des autres par une simple translation. Par "direction générale de couture", on entend la direction de translation par laquelle les points de couture successifs d'un même fil se déduisent les uns des autres, qui correspond à la direction de déplacement de la tête de couture.

Autrement dit, l'invention consiste à donner une structure au produit textile en réalisant des réseaux particuliers, composé d'une succession de points de liage en V, afin de générer une résistance au cisaillement selon quatre axes privilégiés. Cette combinaison multiple de directions de résistance privilégiées confère donc une quasi isotropie de résistance au cisaillement.

Avantageusement, en pratique, les inclinaisons des plans formés par les segments traversants au niveau des points de liage sont symétriques par rapport à la direction globale de couture, d'un réseau de fils de liage à l'autre. Ainsi, les plans formés par les V au niveau de chaque point de couture sont symétriques par rapport à cette direction globale de couture pour assurer une bonne combinaison des différentes résistances et obtenir un comportement au cisaillement optimal.

En pratique, l'inclinaison des normales aux plans formés par ces segments traversants au niveau de chaque point de liage, mesurée par rapport à la direction globale de couture, peut être comprise entre 30 et 60° et avantageusement voisine de 45°. Dans ce cas, les fils de liage constituent des réseaux croisés à 90°, conférant une isotropie en termes de résistance au cisaillement.

Bien entendu, à l'intérieur du plan que forment les segments traversants d'un même point de liage, l'inclinaison de chaque segment peut être optimisée en fonction d'un compromis entre résistance à l'écrasement et résistance au cisaillement que l'on souhaite obtenir. Cette inclinaison de chaque segment, et donc de l'aiguille de couture dans ce plan, peut être choisie en fonction de différents facteurs, et en particulier mais non exclusivement de la densité souhaitée en points de liage, ou de considérations sur la qualité de l'échange du fil entre les aiguilles de couture qui coopèrent pour réaliser le point, et des propriétés mécaniques souhaitées.

Dans une variante de réalisation, il est également possible de prévoir que le plan formé par les segments traversants d'un point de liage possède une direction normale elle-même inclinée par rapport aux faces du produit. Autrement dit, dans cette variante, le plan contenant les différents liages en V n'est pas perpendiculaire à la face du produit, mais également incliné par rapport à ce dernier, le point de liage, soit dans la direction globale de couture, c'est à dire parallèle aux faces du produit. Chaque segment du point de liage, est alors dans un plan incliné par rapport à la normale du produit.

Dans une variante de réalisation, au niveau d'un fil de liage, les normales aux plans formés par les segments traversant des points de liage sont perpendiculaires à la direction globale de couture (D) et présentent une inclinaison non nulle par rapport aux faces du produit. Autrement dit, dans ce cas, le plan caractéristique du V coupe le plan supérieur du produit par une droite qui est parallèle à la direction de couture. Ce plan est incliné transversalement pour ne pas être perpendiculaire aux faces principales du produit, de manière à assurer avec un fil d'un autre réseau, un renforcement en termes de cisaillement.

En pratique, les différents fils de liage peuvent être disposés de différentes manières sur le produit textile. Ainsi, dans une première forme de réalisation, les différents types de fils peuvent être cousus à partir de la même face du produit. Dans ce cas, il est nécessaire que l'angle d'inclinaison du plan caractéristique des points de couture soit différent d'un fil à l'autre, pour assurer l'isotropie de résistance mécanique.

Dans une variante de réalisation, il est possible que des fils de liage différents soient cousus à partir de deux faces distinctes du produit. Autrement dit, un premier fil peut être cousu sur une première face du produit, tandis que le second fil est cousu sur la face opposée, de telle sorte que, par le retournement du produit, sans changer de mécanisme de couture, on obtient un renforcement dans les quatre directions, avec les deux plans caractéristiques et symétriques par rapport à la direction de couture.

Selon les applications, il est possible de traiter les extrémités des points de liage de différentes manières, en fonction de l'état de surface que l'on souhaite obtenir.

Ainsi, dans une première variante, il est possible de relier les extrémités des points de couture successifs par des points de chaînette. Cette solution présente l'avantage d'assurer un ancrage ferme et efficace des différents points de couture, et ce directement pendant les opérations de couture elles-mêmes.

Dans une autre variante de réalisation, les extrémités des points de couture peuvent être laissés libres, et légèrement dépasser de la face par laquelle la couture a eu lieu.

Dans une autre variante de réalisation, il est possible que les extrémités des points de couture successifs soient bouclées sur un fil complémentaire de maintien. Dans ce cas, une très faible portion des fils de liage déborde en étant apparente de la face du produit fini, ce qui permet d'obtenir un état de surface dans lequel les fils de couture n'ont pas d'influence.

En pratique, le produit textile conforme à l'invention peut être réalisé en combinant de multiples matériaux. Dans une première forme de réalisation, la couche centrale peut être à base d'une mousse. Avantageusement, il s'agit d'une mousse souple qui a tendance à se refermer autour des fils qui la traversent, afin d'éviter des passages trop importants de résine lors de l'imprégnation. Cette couche de mousse peut être recouverte d'une ou plusieurs couches de surface, à base d'une étoffe textile et en particulier d'un tissu, dans laquelle la résine d'imprégnation pourra polymériser.

La couche centrale peut être également constituée par une ou plusieurs couches textiles superposées, à base de tissu, de tresse, de nappe de fil ou de non tissé.

L'invention concerne également un procédé de fabrication d'un tel produit textile. Pour chaque point de liage en V, le procédé fait un premier segment en amenant le fil d'une première face à la face opposée par l'intermédiaire d'une aiguille de type couture. Le second segment du point de liage est formé en attrapant ce fil pour le ramener sur la première face par une aiguille de type maille, qui possède un dispositif commandé d'ouverture et fermeture de son chas. Ainsi, dans la formation d'un point de liage en V, le fil ,en partant d'un première face, en traversant l'épaisseur pour lier la face opposée et en revenant sur la première face, crée une structure dans le produit et rattachée à tous les éléments le constituant.

L'aiguille maille qui permet de ramener l'extrémité du point de couture sur la première face présente un chas qui peut être ouvert au moment de la capture du fil et de son échange avec la première aiguille. Ce chas est ensuite fermé pour le trajet à l'intérieur du produit, et ce afin d'éviter tout accrochage inopiné des fibres ou de la mousse.

Avantageusement, en pratique, le dispositif d'ouverture/fermeture du chas de l'aiguille comporte une tige métallique qui coulisse dans un logement prévu à cet effet dans le corps de l'aiguille.

Lors du procédé de couture, les fils de liage qui sont de type ou de réseaux différents peuvent être cousus successivement, par exemple par la même tête de couture qui subit une rotation entre l'aller et le retour dans la largeur du tissu. Les fils de liage peuvent également être cousus simultanément, par des têtes de couture multi-aiguilles, de telle sorte que les réseaux croisés sont ainsi réalisés en un seul passage sur la largeur du produit, ou en continu lorsque la couture est faite dans le sens de production du produit.

Autrement dit, selon un premier mode de mise en oeuvre, les fils de liages sont cousus par une ou plusieurs têtes de couture qui se déplacent en va et vient dans le sens de la largueur du produit.

Dans un autre mode de réalisation, les fils de liages sont cousus par des têtes de couture fixes, sous lesquelles défile le produit, de sorte que les fils de liage se trouvent dans le sens chaîne ou dans la longueur du produit.

### DESCRIPTION SOMMAIRE DES FIGURES

D'autres aspects de l'invention, ainsi que les avantages qui en découlent, ressortiront bien de la description des modes de réalisation qui suivent, à l'appui des figures annexées dans lesquelles :
La figure 1 est une vue en perspective sommaire montrant un détail d'un produit textile conforme à l'invention.
La figure 2 est une vue en perspective sommaire d'un fil de liage du produit de la figure 1.
Les figures 3, 4 et 5 sont des vues respectivement de dessus, de côté et de dessous du point illustré à la figure 2.
La figure 6 est une vue en perspective sommaire, analogue à la figure 2, montrant une variante de réalisation.
Les figures 7 et 8 sont des vues respectivement de côté et de dessus du point illustré à la figure 8.
La figure 9 est une vue en perspective sommaire, analogue à la figure 2, montrant une autre variante de réalisation.
Les figures 10 à 15 sont des vues en coupe d'un produit textile conforme à l'invention, pendant les étapes de couture.

De façon générale, les représentations faites aux figures le sont dans un but de faciliter la compréhension de l'invention. Ainsi, les dimensions représentées peuvent être différentes de celles des éléments réels, certaines étant exagérées pour permettre de les visualiser. De même, les différents fils ont été représentés séparés les uns des autres, pour faciliter la compréhension, alors que dans la réalité, les fils peuvent être plus rapprochés les uns des autres pour conférer les propriétés mécaniques souhaitées.

### MANIERE DE REALISER L'INVENTION

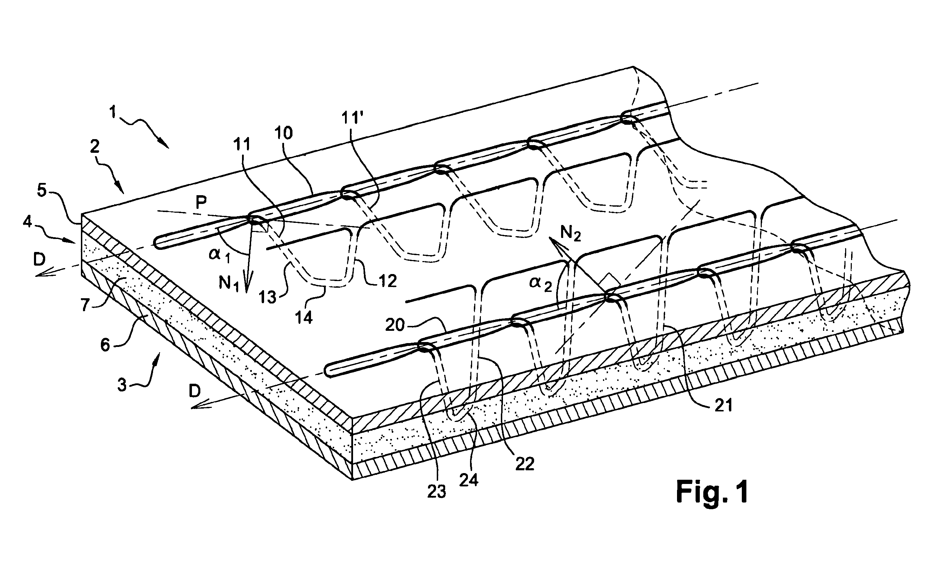

Comme illustré à la figure 1, le produit textile (1) conforme à l'invention se présente sous la forme d'une structure (4) présentant une certaine épaisseur, et possédant deux faces opposées (2,3). Comme déjà évoqué, l'épaisseur .de cette structure peut être réalisée par divers types de matériaux, qu'il s'agisse d'une couche de mousse unique, ou bien encore de l'empilement de plusieurs couches textiles variées, éventuellement prises en combinaison avec des couches de mousse. Les faces (2,3) peuvent comporter en surface des couches textiles spécifiques (5,6), ou bien encore être simplement formées par les bords de la couche de mousse centrale (7).

Conformément à l'invention, cette structure comporte une pluralité de réseaux de fils de structuration traversant l'épaisseur de la couche centrale.

Dans la forme illustrée à la figure 1, seuls deux fils de liage ont été partiellement représentés, mais l'invention couvre bien évidemment des variantes dans lesquelles un nombre plus important de fils différents peuvent être employés.

Par convention, et afin d'alléger la description, on considèrera que le produit conforme à l'invention est décrit en étant posé sur un plan horizontal, de sorte qu'un filtre traversant le produit perpendiculairement à l'une des faces de l'article aura une direction verticale.

De manière simplifiée, chaque fil (10,20) comporte une succession de points de liage qui sont cousus les uns après les autres selon une direction globale de couture D, correspondant à la direction de translation pour le passage d'un point élémentaire (11') au suivant (11). Chaque point de liage (11) comporte deux segments traversants (12,13) liés par un segment intermédiaire (14). Les deux segments (12,13) traversent l'épaisseur de la couche d'âme, tandis que le segment intermédiaire (14) forme un flotté sur la face opposée (3) à la face (2) par laquelle les fils sont cousus.

Conformément à l'invention, le plan défini par les deux segments traversants (12,13) possède une normale N₁ qui présente une inclinaison α₁ par rapport à la direction D de couture. Comme on le remarque à la figure 1, le second fil de liage (20) présente également des points de liage successifs incluant de manière similaire les segments traversants (22,23), eux-mêmes reliés par un segment intermédiaire (24). De la même manière, le plan défini par les segments traversants (22,23) possède une normale N₂ qui présente une inclinaison α₂ par rapport à la direction de couture D du fil (20).

Selon une caractéristique importante de l'invention, les inclinaisons α₁ et α₂ des normales des plans définis par les points de liage (11,21) de chaque fil, sont différentes, et préférentiellement forment un angle voisin respectivement de +45° et -45° par rapport à la direction de couture D. De la sorte, ces plans sont sensiblement perpendiculaires l'un à l'autre.

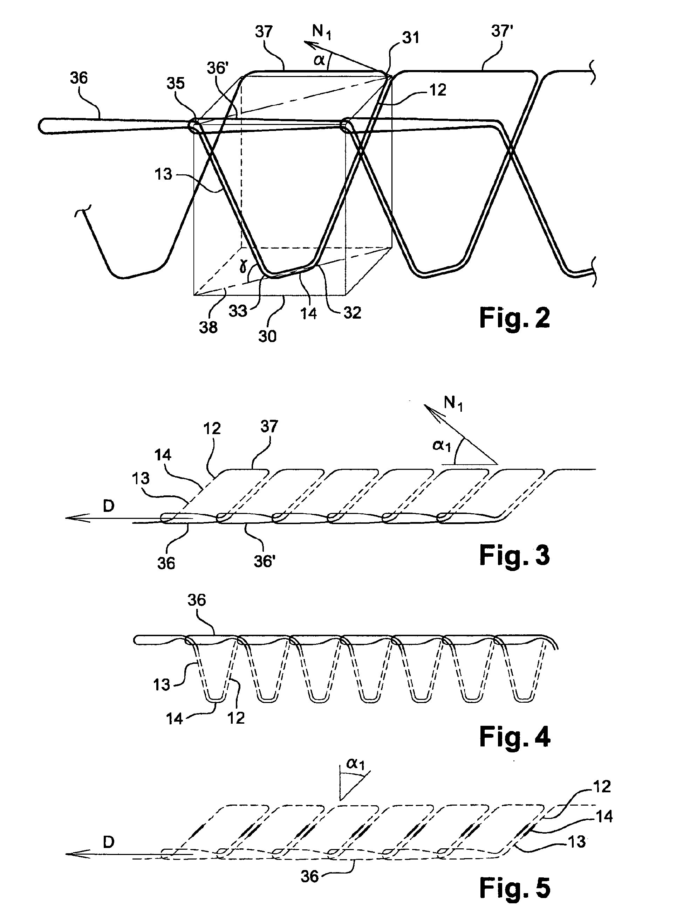

On a représenté à la figure 2 un unique fil de liage afin de préciser les différentes inclinaisons du plan et des segments de fils. Pour faciliter la compréhension, chaque point de liage (11) est inscrit à l'intérieur d'un parallélépipède unitaire dessiné en traits pointillés. Ainsi, le fil est introduit dans l'épaisseur du tissu par un premier sommet (31) du parallélépipède (30). Le premier segment (12) traverse l'épaisseur du produit pour ressortir au niveau d'un point (32) situé sur la face opposée (3). Le segment (14) apparent sur la face opposée présente une longueur variable. Le fil de liage pénètre à nouveau à l'intérieur de l'épaisseur de l'article au niveau du point (33) pour traverser l'épaisseur de l'article et déboucher au niveau d'un sommet (35) du parallélépipède (30).

Dans la forme illustrée, les points de liage se prolongent par une boucle (36) de manière à former un point de chaînette avec la boucle analogue (36') du point précédent. Au niveau du point (31) d'entrée du premier segment (12), les portions (37,37') assurent la continuité avec les points précédant les suivants. Ces segments rectilignes, parallèles à la direction de couture D, forment avec les boucles (36) les portions apparentes du fil de liage sur la première face (2) du produit.

Conformément à l'invention, le plan formé par les segments (12,13) présente une normale N₁ qui possède une inclinaison α par rapport à la direction de couture D.

Cette inclinaison α s'observe clairement à la figure 3 qui est une représentation vue de dessus du point de la figure 2.

Ainsi, le plan P qui est défini par ces segments (12,13) coupe la face inférieure (3) du produit au niveau de la droite (38) représentée en traits pointillés à la figure 2, formant une diagonale de la face inférieure du parallélépipède (30). Le segment (14), qui forme le flotté apparent sur la face inférieure est donc situé sur cette diagonale. Ce flotté apparaît en traits pleins à la figure 5, qui est une vue de dessous du produit.

L'inclinaison γ des segments (12,13) par rapport à un plan horizontal, et mesurée dans le plan caractéristique P peut être réglée en fonction de l'écartement entre les points et l'épaisseur de l'article. Ainsi, plus cette inclinaison est importante plus le produit présente une bonne résistance à l'écrasement. A l'inverse, une faible inclinaison confère de bonnes propriétés en termes de résistance au cisaillement. L'inclinaison optimale est donc recherchée en fonction des propriétés globales que l'on souhaite obtenir pour le produit fini.

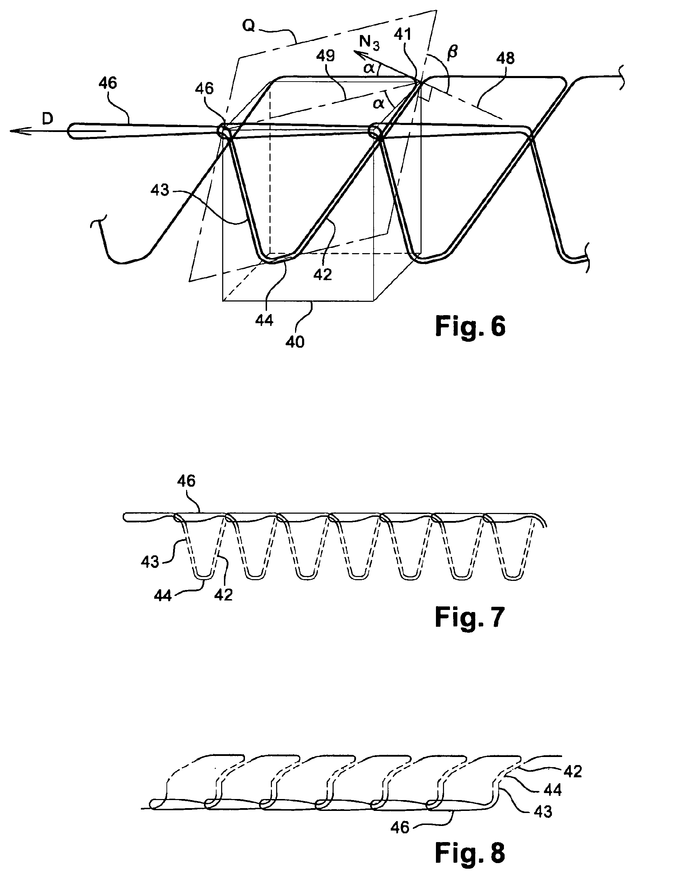

Dans une variante de réalisation illustrée à la figure 6, le plan Q défini par les segments (42,43) d'un point de liage n'est pas vertical, c'est-à-dire n'est pas perpendiculaire au plan des faces (2,3) de l'article. Ainsi, ce plan Q coupe la face inférieure (3) du produit au niveau d'une ligne (38) représentée en traits mixtes à la figure 6, et qui est donc décalé par rapport à la diagonale du parallélépipède élémentaire (40) défini par les points d'entrée et de sortie du fil sur la face supérieure (2). De la sorte, le plan Q présente une normale N₃ qui possède une inclinaison β mesurée par rapport à une perpendiculaire (48) à la droite (49) reliant les deux points d'entrée et de sortie (41,45) du fil dans le plan de la face supérieure (2).

Cette inclinaison supplémentaire (β) conduit aux inclinaisons des différents segments (42,43), vu respectivement de côté et de dessus tel qu'illustré aux figures 7 et 8.

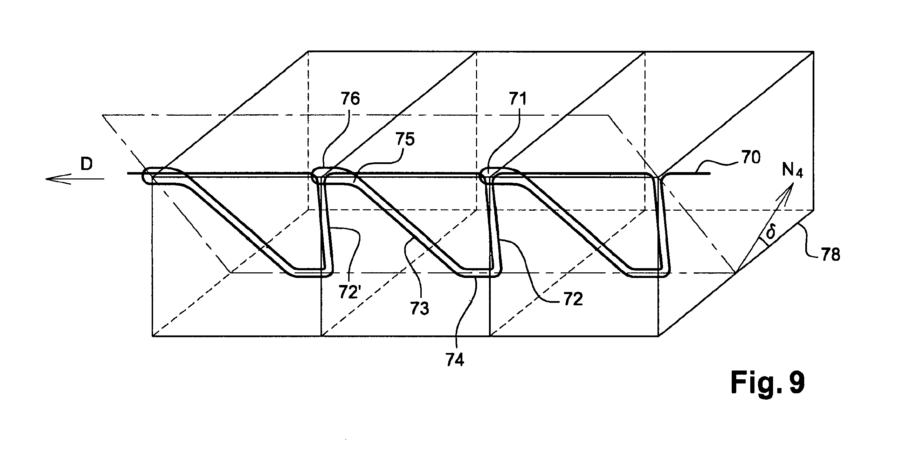

La variante illustrée à la figure 9 est telle que les différents segments des points de liage se trouvent dans un plan R qui est parallèle à la direction de couture D, et qui n'est pas perpendiculaire aux faces principales (2,3) du produit. Plus précisément, au niveau de chaque point de liage, le fil (70) comporte un premier segment (72) qui pénètre dans l'épaisseur au niveau d'un point d'entrée (71). Ce premier segment (72) se prolonge sur la face apparente (3) par un flotté (74). Le fil pénètre alors à nouveau dans l'épaisseur de l'article par le second segment (73), pour déboucher sur la face supérieure au niveau du point (75). Une boucle (76) est ainsi tirée pour former l'extrémité du point de liage. Dans cette boucle (76), est piqué le premier segment (72') du point suivant. La normale N₄ au plan R se trouve dans un plan perpendiculaire à la direction de couture D, et forme une inclinaison δ avec une droite (78), perpendiculaire à la direction de couture D et contenue dans le plan des faces de l'article.

La combinaison de deux fils de couture analogues à ceux de la figure 9, mais présentant des inclinaisons symétriques par rapport à un plan vertical parallèle à la direction de couture D conduit à la réalisation du renfort quadri-directionnelle performant en termes de résistance au cisaillement.

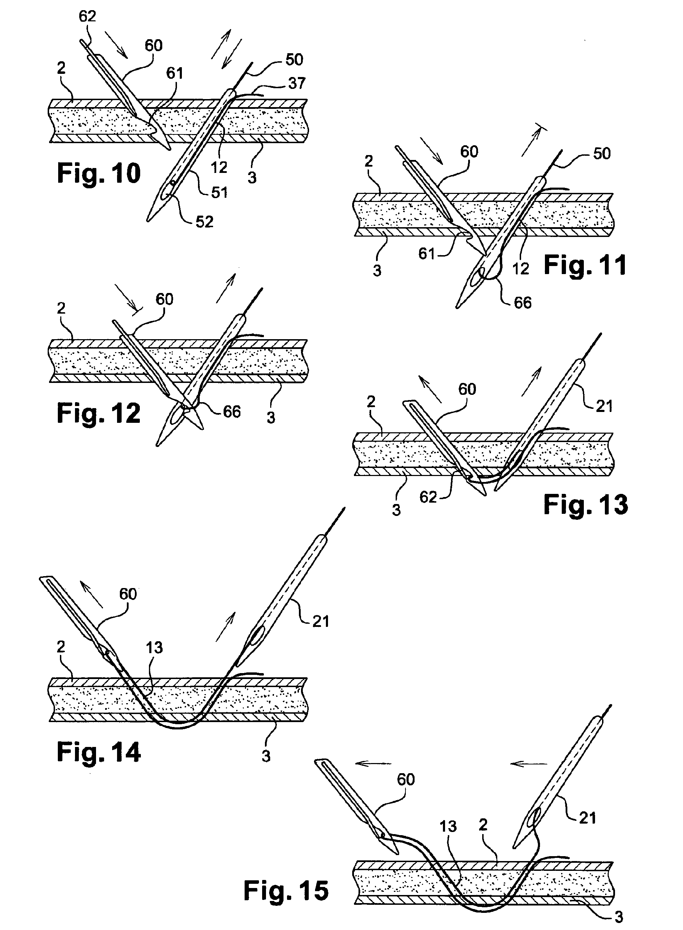

Les différents points de liage peuvent être réalisés comme illustré aux figures 10 à 15. La machine de couture utilisée peut être considérée comme dérivée de celle décrite dans le document US-1 714 928 en ce qui concerne le type d'aiguilles utilisées .Ainsi, dans une première étape illustrée à la figure 10, le fil (50) est amené à proximité de la face supérieure (2) de l'article par une aiguille (51), dont elle traverse le chas fermé (52). Ce fil (50) est relié au dispositif d'alimentation en fil de couture. Après piquage de la face supérieure (2), l'aiguille (51) emmène le fil (50) pour former le premier segment (12) du point de liage. Parallèlement, une seconde aiguille (60), de type maille, c'est-à-dire possédant un chas ouvert (61), traverse également, l'épaisseur de l'article pour préparer la remontée du fil (50). Les trajectoires des deux aiguilles sont déterminées de telle sorte qu'elles sont concourantes tel qu'illustré à la figure 10.

Comme illustré à la figure 11; lorsque l'aiguille (51) a traversé l'intégralité de l'épaisseur de l'article, elle recule légèrement dans sa trajectoire de manière à faire dépasser sous la face inférieure une quantité suffisante de fil, et ce afin de permettre à l'aiguille (60) d'accrocher la boucle ainsi formée (66). Ainsi, comme illustré à la figure 12, le chas (61) de l'aiguille (60) est ouvert et accroche lors du mouvement de remontée de l'aiguille (60) la boucle (66). Pour assurer un maintien du fil dans le chas (61), ce dernier est ensuite refermé par un mécanisme approprié. Dans la forme illustrée aux figures 10 à 14 ce mécanisme est constitué par une tige (62) coulissante à l'intérieur d'un logement prévu dans le corps de l'aiguille. Le chas ainsi fermé évite les risques d'accrochage d'autres fils lors de la traversée du produit. Par la suite, et comme illustré à la figure 13, le fil (50) est tiré à travers l'épaisseur de l'article pour former le second segment (13). Lorsque l'aiguille (60) est ressortie du produit, comme illustré à la figure 15, elle relâche le fil afin de former selon l'application souhaitée soit des boucles pour réaliser un point de chaînette, soit des portions libres plus ou moins apparentes à la surface (2) de l'article, et de faciliter le déplacement entre deux points. Dans une variante non illustrée, il est également possible dans une variante non illustrée que ces différentes boucles, lorsqu'elles ressortent de la face supérieure (2) du produit, soient prises par un fil de maintien. Ce fil de maintien traverse donc les boucles formant les extrémités des points de liage successifs.

Comme déjà évoqué, l'invention nécessite, pour obtenir le renforcement souhaité, que deux types de fils de liage différents soient cousus. Par fils différents, on entend des fils généralement de même nature, mais qui sont cousus avec des paramètres géométriques différents, de manière à obtenir la multiplicité des directions de renforcement.

Dans la forme illustrée à la figure 1, les deux fils sont cousus à partir de la même face, mais bien entendu, il est possible que ces coutures se fassent par les faces opposées. Dans ce cas, chaque face possède une apparence similaire, avec une combinaison de flottés parallèles à la direction de couture, et de flottés plus courts, situés dans une direction diagonale. Dans cette deuxième variante, la même tête de couture peut être utilisée pour les deux opérations, après retournement du produit. A l'inverse, si l'on souhaite coudre les deux fils par la même face, il est nécessaire d'utiliser une tête de couture qui fait une rotation en bout de ligne pour passer à la ligne de couture suivante, ou deux têtes de couture différentes.

A titre d'exemple, on peut citer la fabrication d'un produit réalisé selon l'invention, qui comporte une âme en mousse polyoléfine de masse volumique 90kg/m³ et de 10 mm d'épaisseur.

Cette mousse est recouverte sur sa face inférieure et supérieure par un tissu de verre de 800g/m². Ces trois couches sont liées par deux réseaux de fils de verre de 600 tex. Ces fils sont mis en place par des aiguilles formant un angle de 90° entre elles et plaçant les fils à ±45° par rapport à la direction d'avancement D du produit. Ce produit comporte des fils de liage avec un pas de 10mm dans le sens longitudinal et 10mm dans le sens transversal. Sur la surface supérieure, on observe quatre lignes de points, à savoir deux lignes de points de chaînette formés par les extrémités des V, et deux lignes de points de couture formant les flottés entre V, chaque 10mm. Ces points de couture sont orientés dans le sens de la longueur du produit. Sur la surface inférieure est visible un réseau de points en croix, formés par les flottés entre les premier et second segments de chaque V, dont le pas est de 10 mm dans les deux sens, long et travers. La longueur de chaque croix dépend du réglage de la machine. Elle est de 13 mm dans cet exemple de produit.

Le procédé est mis en oeuvre sur une machine qui comporte 4 barres d'aiguilles perpendiculaires au sens d'avancement et formant des plans à ±60° par rapport à la surface du produit. Les aiguilles sont fixées chaque 10mm avec un angle de ±60° sur ces barres qui sont mues suivant l'orientation de ces aiguilles.

Ces barres forment deux ensembles mettant en place les deux directions croisées de fils de liage. Dans un ensemble, une barre comporte les aiguilles de type "couture" et l'autre les aiguilles de type "maille". Leur cycle de fonctionnement est celui montré dans les figures 10 à 15. Le pas d'avance du produit est de 10mm avec des aiguilles disposées chaque 10mm.

Il ressort de ce qui précède que le produit conforme à l'invention et le procédé correspondant présentent de multiples avantages. En effet, ils permettent de réaliser un produit apte à former un espaceur possédant une bonne capacité de déformabilité le rendant particulièrement attractif pour les opérations de moulage par infusion de résine ou analogue. Le produit permet de simplifier la réalisation de nombreuses pièces de formes complexes. Cette déformabilité est combinée avec de bonnes propriétés de résistance mécanique, tant à la compression qu'au cisaillement, et ce avec un procédé de réalisation simple et pouvant être mis en oeuvre directement sur la chaîne de production du produit textile.

## Revendications

1. Produit textile tridimensionnel (1) présentant deux faces (2,3) reliées par une pluralité de fils de liage (10,20) cousus au travers dudit produit, chaque fil de liage (10,20) comprenant une succession de points de couture, chaque point de couture (11) comportant deux segments (12,13) traversant le produit d'une face à l'autre, **caractérisé en ce qu'**il comporte au moins deux types de fils de liage distincts (10,20), et **en ce que** pour chaque type de fil, au niveau d'un point de couture, le plan formé par les segments (12,13;22,23) du fil qui traversent le produit, possède une direction normale (N₁ ; N₂) qui présente une inclinaison (α₁ ; α₂) non nulle par rapport à la direction globale D de couture du fil de liage (10), les inclinaisons (α₁,α₂) desdits plans étant différentes d'un type de fil à l'autre.

2. - Produit selon la revendication 1, dans lequel les inclinaisons (α₁;α₂) des plans formés par les segments (12,13;22,23) traversant des points de liage sont symétriques par rapport à la direction globale D de couture, d'un type de fil de liage à l'autre.

3. - Produit selon la revendication 1, **caractérisé en ce que** l'inclinaison (α₁,α₂) des normales (N₁,N₂) aux plans formés par les segments traversant des points de liage, mesurée par rapport à la direction globale de couture, est comprise entre 30 et 60°.

4. - Produit selon la revendication 1, **caractérisé en ce qu'**au niveau d'un fil de liage, les normales (N₃) aux plans formés par les segments traversant des points de liage présentent une inclinaison (β) non nulle par rapport aux faces (2,3) du produit.

5. - Produit selon la revendication 1, **caractérisé en ce qu'**au niveau d'un fil de liage, les normales (N₄) aux plans formés par les segments traversant des points de liage sont perpendiculaires à la direction globale de couture (D) et présentent une inclinaison (δ) non nulle par rapport aux faces (2,3) du produit.

6. - Produit selon la revendication 1, **caractérisé en ce que** les différents types de fils de liage sont cousus à partir de la même face du produit.

7. - Produit selon la revendication 1, **caractérisé en ce que** au moins deux des types de fils de liage sont cousus à partir de deux faces distinctes du produit.

8. - Produit selon la revendication 1, **caractérisé en ce que** les extrémités des points de couture liés par des points de chaînette.

9. - Produit selon la revendication 1, **caractérisé en ce que** les extrémités des points de couture sont libres.

10. - Produit selon la revendication 1, **caractérisé en ce qu'**il comporte une couche centrale à base d'une mousse que les extrémités des points de couture successifs sont bouclées sur un fil complémentaire de maintien.

11. - Produit selon la revendication 1, **caractérisé en ce qu'**il comporte une couche centrale à base d'une mousse.

12. - Produit selon la revendication 1, **caractérisé en ce qu'**il comporte au moins une couche de surface à base d'une étoffe textile.

13. - Procédé de fabrication d'un produit textile selon l'une des revendications 1 à 12, dans lequel, pour faire un point de liage, un premier segment (12) est formé en amenant le fil (50) d'une première face (2) à la face opposée (3) par l'intermédiaire d'une aiguille (21) de type couture, le second segment (13) étant formé en attrapant le fil (50) pour le ramener sur la première face (2) par l'intermédiaire d'une aiguille (60) de type maille, incluant un dispositif (62) commandé d'ouverture/fermeture de son chas (61).

14. - Procédé de fabrication selon la revendication 13, dans lequel le dispositif d'ouverture/fermeture de l'aiguille de type maille comporte une tige métallique coulissant dans un logement prévu dans le corps de ladite aiguille.

15. - Procédé selon la revendication 13, dans lequel les fils de liage de types différents sont cousus successivement.

16. - Procédé selon la revendication 13, dans lequel plusieurs des fils de liage de types différents sont cousus simultanément.

17. - Procédé selon la revendication 13, **caractérisé en ce que** les fils de liages sont cousus par une ou plusieurs têtes de couture qui se déplacent en va et vient dans le sens de la largueur du produit.

18. - Procédé selon la revendication 13, **caractérisé en ce que** les fils de liages sont cousus par des têtes de couture fixes, sous lesquelles défile le produit.

## Claims

1. Three-dimensional textile product (1) having two faces (2, 3) linked by a plurality of binding yarns (10, 20) sewed through said product, each binding yarn (10, 20) comprising a succession of stitches, each stitch (11) comprising two segments (12, 13) that pass through the product from one face to the other, **characterised in that** it comprises at least two types of different binding yarns (10, 20) and **in that**, for each type of yarn, in the area of one stitch, the plane formed by segments (12, 13; 22, 23) of the yarn that pass through the product has a normal direction (N₁; N₂) that has a slope (α₁; α₂) that is not zero relative to the overall stitch direction D of binding yarn (10), the slopes (α₁; α₂) of said planes being different from one type of yarn to the other.

2. Product as claimed in claim 1, in which the slopes (α₁; α₂) of the planes formed by through-penetrating segments (12, 13; 22, 23) of the binding stitches are symmetrical relative to the overall stitch direction D from one type of binding yarn to the other.

3. Product as claimed in claim 1, **characterised in that** the slope (α₁; α₂) of the normal directions (N₁; N₂) to the planes formed by the through-penetrating segments of the binding stitches measured relative to the overall stitch direction is 30° to 60°.

4. Product as claimed in claim 1, **characterised in that**, in the area of one binding yarn, the normal directions (N₃) to the planes formed by the through-penetrating segments of the binding stitches have a slope (β) that is not zero relative to the faces (2, 3) of the product.

5. Product as claimed in claim 1, **characterised in that**, in the area of one binding yarn, the normal directions (N₄) to the planes formed by the through-penetrating segments of the binding stitches are perpendicular to the overall stitch direction (D) and have a slope (δ) that is not zero relative to the faces (2, 3) of the product.

6. Product as claimed in claim 1, **characterised in that** the various types of binding yarn are sewn starting from the same face of the product.

7. Product as claimed in claim 1, **characterised in that** at least two of the types of binding yarn are sewn starting from two different faces of the product.

8. Product as claimed in claim 1, **characterised in that** the ends of the stitches are linked by chain stitches.

9. Product as claimed in claim 1, **characterised in that** the ends of the stitches are free.

10. Product as claimed in claim 1, **characterised in that** it comprises a central foam-based layer and that the ends of successive stitches are looped on a matching retention yarn.

11. Product as claimed in claim 1, **characterised in that** it comprises a central foam-based layer.

12. Product as claimed in claim 1, **characterised in that** it comprises at least one textile fabric-based surface layer.

13. Method for manufacturing a textile product as claimed in any claims 1 to 12 in which, in order to produce a binding yarn, a first segment (12) is formed by bringing yarn (50) from one first face (2) to the opposite face (3) by using a sewing type needle (21), the second segment (13) being formed by trapping yarn (50) in order to return it to first face (2) by using a knitting type needle (60) that includes a controlled device (62) for opening/closing its eye (61).

14. Manufacturing method as claimed in claim 13, wherein the device for opening/closing the eye of the knitting type needle comprises a metal rod that slides in a receptacle provided in the body of said needle.

15. Method as claimed in claim 13, wherein binding yarns of different types are successively sewn.

16. Method as claimed in claim 13, wherein several binding yarns of different types are sewn simultaneously.

17. Method as claimed in claim 13, **characterised in that** the binding yarns are sewn by one or more sewing heads that travel back and forth in the direction of the width of the product.

18. Method as claimed in claim 13, **characterised in that** the binding yarns are sewn by fixed sewing heads underneath which the product is transported.

## Patentansprüche

1. Dreidimensionales Textilprodukt (1), das zwei Seiten (2, 3) aufweist, die durch eine Mehrzahl von durch das Produkt hindurch genähten Bindungsfäden (10, 20) verbunden sind, wobei jeder Bindungsfaden (10, 20) eine Folge von Nähstichen umfasst, wobei jeder Nähstich (11) zwei Segmente (12, 13) umfasst, die das Produkt von einer Seite zur anderen durchqueren, **dadurch gekennzeichnet, dass** es mindestens zwei verschiedene Bindungsfadentypen (10, 20) umfasst und dass die Ebene, die von den das Produkt durchquerenden Segmenten (12, 13; 22, 23) des Fadens gebildet wird, bei jedem Fadentyp auf Höhe eines Nähstichs eine normale Richtung (N₁; N₂) besitzt, die eine Neigung (α₁; α₂) ungleich null bezüglich der allgemeinen Nährichtung D des Bindungsfadens (10) aufweist, wobei die Neigungen (α₁, α₂) dieser Ebenen von einem Fadentyp zum anderen verschieden sind.

2. Produkt nach Anspruch 1, bei dem die Neigungen (α₁; α₂) der Ebenen, die von den durchquerenden Segmenten (12, 13; 22, 23) der Bindungsstiche gebildet werden, bezüglich der allgemeinen Nährichtung D von einem Bindungsfadentyp zum anderen symmetrisch sind.

3. Produkt nach Anspruch 1, **dadurch gekennzeichnet, dass** die Neigung (α₁, α₂) der Normalen (N₁, N₂) zu den Ebenen, die von den durchquerenden Segmenten der Bindungsstiche gebildet werden, gemessen bezüglich der allgemeinen Nährichtung, zwischen 30 und 60° beträgt.

4. Produkt nach Anspruch 1, **dadurch gekennzeichnet, dass** die Normalen (N₃) zu den Ebenen, die von den durchquerenden Segmenten der Bindungsstiche gebildet werden, auf Höhe eines Bindungsfadens eine Neigung (β) ungleich null bezüglich der Seiten (2, 3) des Produkts aufweisen.

5. Produkt nach Anspruch 1, **dadurch gekennzeichnet, dass** die Normalen (N₄) zu den Ebenen, die von den durchquerenden Segmenten der Bindungsstiche gebildet werden, auf Höhe eines Bindungsfadens zur allgemeinen Nährichtung (D) senkrecht sind und eine Neigung (δ) nicht ungleich bezüglich der Seiten (2, 3) des Produkts aufweisen.

6. Produkt nach Anspruch 1, **dadurch gekennzeichnet, dass** die verschiedenen Bindungsfadentypen von der gleichen Seite des Produkts aus genäht sind.

7. Produkt nach Anspruch 1, **dadurch gekennzeichnet, dass** mindestens zwei Bindungsfadentypen von zwei verschiedenen Seiten des Produkts aus genäht sind.

8. Produkt nach Anspruch 1, **dadurch gekennzeichnet, dass** die Enden der Nähstiche durch Kettenstiche verbunden.

9. Produkt nach Anspruch 1, **dadurch gekennzeichnet, dass** die Enden der Nähstiche frei sind.

10. Produkt nach Anspruch 1, **dadurch gekennzeichnet, dass** es eine Mittelschicht auf der Basis eines Schaums umfasst dass die Enden der aufeinanderfolgenden Nähstiche um einen zusätzlichen Haltefaden geschlungen sind.

11. Produkt nach Anspruch 1, **dadurch gekennzeichnet, dass** es eine Mittelschicht auf der Basis eines Schaums umfasst.

12. Produkt nach Anspruch 1, **dadurch gekennzeichnet, dass** es mindestens eine Oberflächenschicht auf der Basis eines textilen Stoffs umfasst.

13. Verfahren zur Herstellung eines Textilprodukts nach einem der Ansprüche 1 bis 12, bei dem zur Durchführung eines Bindungsstichs ein erstes Segment (12) gebildet wird, indem der Faden (50) von einer ersten Seite (2) zur entgegengesetzten Seite (3) mit Hilfe einer Nadel (21) vom Typ Nähnadel gebracht wird, wobei das zweite Segment (13) gebildet wird, indem der Faden (50) aufgenommen wird, um ihn auf die erste Seite (2) zu bringen, und zwar mit Hilfe einer Nadel (60) vom Typ Maschennadel, die eine gesteuerte Vorrichtung (62) zum Öffnen/Schließen ihres Nadelöhrs (61) einschließt.

14. Herstellungsverfahren nach Anspruch 13, bei dem die Vorrichtung zum Öffnen/Schließen der Nadel vom Typ Maschennadel eine Metallstange umfasst, die in einer im Körper der Nadel vorgesehenen Aussparung gleitet.

15. Verfahren nach Anspruch 13, bei dem die Bindungsfäden von verschiedenen Typen nacheinander genäht werden.

16. Verfahren nach Anspruch 13, bei dem mehrere Bindungsfäden von verschiedenen Typen gleichzeitig genäht werden.

17. Verfahren nach Anspruch 13, **dadurch gekennzeichnet, dass** die Bindungsfäden durch einen oder mehrere Nähköpfe genäht werden, die sich in der Richtung der Breite des Produkts hin- und herbewegen.

18. Verfahren nach Anspruch 13, **dadurch gekennzeichnet, dass** die Bindungsfäden durch feststehende Nähköpfe genäht werden, unter denen das Produkt vorbeiläuft.
